# EUROPÄISCHE PATENTANMELDUNG

(11) **EP 4 317 680 A1**
(43) Veröffentlichungstag der Anmeldung: **07.02.2024**
(21) Anmeldenummer: 22188952.0
(22) Anmeldetag: 05.08.2022
(51) Int. Cl.: F03D 7/02, F03D 17/00

(54) **VERFAHREN ZUR ERKENNUNG EINER UNWUCHT EINER WEA UND ZUR STROMERZEUGUNG MITTELS WEA**

(71) Anmelder: Lucks, Christoph, 22303 Hamburg (DE); Bruhnsen, Paul, 22880 Wedel (DE)
(72) Erfinder: Lucks, Christoph, 22303 Hamburg (DE); Bruhnsen, Paul, 22880 Wedel (DE)
(74) Vertreter: Raffay & Fleck

(57) **Zusammenfassung**

Die Erfindung betrifft ein Verfahren zur Erkennung einer Unwucht und/oder eines Pitchwinkelunterschiedes in einem Rotor einer Windenergieanlage auf Basis von im laufenden Betrieb der Windenergieanlage aufgenommenen Geräuschen des Rotors.

Aus dem Stand der Technik ist es bekannt, die Geräuschentwicklung einer Windenergieanlage zu messen und darauf basierend Betriebsparameter anzupassen. Auch ist es bekannt, Schwingungen der Welle akustisch zu erfassen.

Aufgabe der Erfindung ist es, ein, insbesondere mobiles, Verfahren anzugeben, mit dem auf einfache Weise Unwuchten und/oder Pitchwinkelabweichungen und/oder Rotorblattschädigungen erkannt und insbesondere auch vermessen werden können.

Die Aufgabe wird unter anderem gelöst durch ein Verfahren zur Erkennung einer Unwucht und/oder eines Pitchwinkelunterschiedes und/oder Rotorblattschädigungen, wobei im laufenden Betrieb der Windenergieanlage die Geräusche der von Wind angetriebenen Rotorblätter erfasst werden. Das Verfahren ist dadurch gekennzeichnet, dass das Frequenzspektrum mit einer Frequenzspektrumsreferenz verglichen wird, um durch Abweichungen von der Frequenzspektrumsreferenz eine Unwucht und/oder einen Pitchwinkelunterschiedes und/oder Rotorblattschädigungen zu erkennen.

## Beschreibung

Die Erfindung betrifft ein Verfahren zur Erkennung einer Unwucht und/oder eines Pitchwinkelunterschiedes in einem Rotor einer Windenergieanlage auf Basis von im laufenden Betrieb der Windenergieanlage aufgenommenen Geräuschen des Rotors.

Aus dem Stand der Technik ist es bekannt, die Geräuschentwicklung einer Windenergieanlage zu messen und darauf basierend Betriebsparameter anzupassen, so beispielsweise aus der US 2014/0193257 A1 oder der WO 2010/061255 A2. Auch ist es aus der US 11,187,608 B2 bekannt, Schwingungen der Welle akustisch zu erfassen, um Unwuchten zu erkennen. Zudem ist es bekannt, mittels Laser Unwuchten oder Pitchwinkelabweichungen zu vermessen.

Der Einsatz von Lasern als mobile Lösung ist aufwendig und hardwareintensiv. Insbesondere bei off-shore Anlagen ist der Einsatz mobiler Laser aufwendig und schwierig. Messungen an der Welle sind meist ungenau und nicht mobil möglich. Unwuchten und/oder Pitchwinkelabweichungen der Rotorblätter eines Rotorblatts untereinander führen zu reduziertem Energieertrag und zu erhöhter Abnutzung der Windenergieanlage. Es ist daher wünschenswert derartige Abnormalitäten zu erkennen und zu beseitigen.

Aufgabe der Erfindung ist es, ein, insbesondere mobiles, Verfahren anzugeben, mit dem auf einfache Weise Unwuchten und/oder Pitchwinkelabweichungen und/oder einer Rotorblattschädigung erkannt und insbesondere auch vermessen werden können.

Die Aufgabe wird unter anderem gelöst durch ein Verfahren zur Erkennung einer Unwucht und/oder eines Pitchwinkelunterschiedes und/oder einer Rotorblattschädigung zwischen den Rotorblättern eines Rotors einer Windenergieanlage oder zu Erkennung, ob eine nicht rein massenerregte Unwucht, ein Pitchwinkelunterschied zwischen den Rotorblättern eines Rotors oder eine Rotorblattschädigung einer Windenergieanlage vorliegt, wobei im laufenden Betrieb der Windenergieanlage die Geräusche der von Wind angetriebenen Rotorblätter des Rotors erfasst werden. Das Verfahren ist dadurch gekennzeichnet, dass insbesondere eine Frequenzanalyse der Geräusche der Rotorblätter durchgeführt wird, beispielsweise durch eine FFT, und das Frequenzspektrum mit einer Frequenzspektrumsreferenz verglichen wird, um durch Abweichungen von der Frequenzspektrumsreferenz eine Unwucht und/oder einen Pitchwinkelunterschiedes und/oder einer Rotorblattschädigung zu erkennen.

Das Frequenzspektrumsreferenz kann auf verschiedene Arten gewonnen werden. Es kann durch Simulation berechnet oder aus Messungen, beispielsweise historischen desselben Rotors oder baugleicher oder ähnlicher Anlagen, gewonnen werden. Die Abweichung ist insbesondere eine solche größer als eine, insbesondere vorbestimmte, tolerable Abweichung. Die, insbesondere vorbestimmte, tolerable Abweichung kann absolut oder relativ definiert sein. Sie kann auch basierend auf Messungen der Geräusche des oder anderer, insbesondere baugleicher oder ähnlicher, Rotoren bestimmt werden, beispielsweise basierend auf den Unterschieden der Spektren der, beispielsweise 50% der, Rotorblätter, die die geringsten Unterschiede aufweisen. So kann beispielsweise die maximale Abweichung zwischen den Spektren zweier dieser Blätter als tolerable Abweichung verwendet werden. Insbesondere liegt sie im Bereich von 0,5 bis 5 dB, insbesondere von 0,5 bis 2 dB, insbesondere über eine Mindestfrequenzspanne, insbesondere im Bereich von 2 bis 50 kHz, insbesondere im Bereich von 5 bis 20 kHz. Die Abweichung gilt insbesondere erst dann als vorhanden, wenn eine Abweichung größer als die tolerable Abweichung über eine Mindestfrequenzspanne gegeben ist. Dabei kann gefordert sein, dass die Abweichung über eine zusammenhängende Frequenzspanne, insbesondere die Mindestfrequenzspanne gegeben ist oder es kann ausreichen, wenn die Abweichung über Frequenzabschnitte gegeben ist, die zusammen die Mindestfrequenzspanne zumindest erreichen. Insbesondere werden die Geräusche in einem Frequenzbereich mit einer Breite von mindestens 5kHz, insbesondere mindestens 8kHz und/oder maximal 30kHz, insbesondere maximal 20kHz betrachtet. Insbesondere werden Geräusche in mindestens einem Bereich im Bereich von 10 Hz bis 40 kHz betrachtet. Insbesondere wird das Vorliegen einer Unwucht und/oder einer Pitchwinkelabweichung und/oder einer Rotorblattschädigung angenommen, wenn Abweichung größer ist als die, insbesondere vorbestimmte, tolerable Abweichung.

Wird eine Abweichung erkannt und kann diese insbesondere nicht durch Veränderung der Pitchwinkel beseitigt werden, so kann eine umfassendere Analyse mit anderen Verfahren, beispielsweise mittels Lasers, erfolgen.

Mit dem erfindungsgemäßen Verfahren können neben nicht masseerregten Unwuchten, insbesondere Unwuchten auf Grund unterschiedlicher Pitchwinkel sowie auch Schäden an den Rotorblättern delektiert werden, die einen Einfluss auf die Strömung haben. Das sind insbesondere aufgeplatzt Blattspitzen, und/oder offene Schalenverklebungen, beispielsweise in Folge eines Blitzschlags, und/oder beschädigte und abgerissene Strömungselemente wie Vortexgeneratoren oder Zackenbänder. Auch erodierte Vorderkannten können erkannt werden.

Eine rein massenerregte Unwucht ist über das Frequenzspektrum nicht erkennbar.

Insbesondere bringt das erfindungsgemäße Verfahren bereits große Vorteile wenn nur geprüft wird, ob ein Unwucht, eine Pitchwinkelabweichung oder ein Blattschädigung erkennbar ist. Da das Verfahren so schnell und einfach durchführbar ist, können damit im großen Umfang aufwendigere Messungen vermieden werden. So kann beispielsweise in kurzer Zeit mit wenig Aufwand ein gesamter Windpark analysiert werden, um diejenigen wenigen Anlagen zu identifizieren, bei denen zu erwarten ist, dass umfangreichere Analysen Probleme aufzeigen werden. Denn die meisten während des Betriebs einer Windenergieanlage auftretenden Probleme des Rotors lassen sich durch das erfindungsgemäße Verfahren leicht erkennen. Eine genauere Differenzierung ist somit nicht zwingend durch das Verfahren erforderlich, eine einfache Klassifikation danach, ob mit dem erfindungsgemäßen Verfahren ein Problem erkennbar ist, ist bereits mit großen Vorteilen verbunden und kann somit ausreichen.

Mit Vorteil ist oder wird die Frequenzspektrumsreferenz abgeleitet aus den Geräuschen eines Rotors, einer anderen, insbesondere baugleichen, Windenergeianlage, einer Datenbank historischer Geräusche der Windenergieanlage und/oder einer anderen, insbesondere baugleichen Windenergieanlage und/oder aus den Geräuschen eines Rotorblatts oder mehrerer Rotorblätter des Rotors und/oder aus den Geräuschen des Rotors. Dies kann beispielsweise durch Verwendung eines früher aufgezeichneten Geräuschs, durch Summen, Normierung und/oder Mittelwertbildung erfolgen. Die Frequenzspektrumsreferenz kann dann beispielsweise durch eine FFT erzeugt werden. Dazu können aktuelle und/oder historische Geräusche der zu untersuchenden und/oder baugleicher oder ähnlicher Anlagen verwendet werden. Insbesondere kann vor dem Vergleiche eine Normierung durchgeführt werden, um beispielsweise unterschiedliche Abstände oder Verstärkungen bei der Aufnahme auszugleichen.

Insbesondere wird als Pitchwinkelunterschied der Unterschied zwischen dem Pitchwinkel eines ersten Rotorblattes, insbesondere des Rotors, und dem Pitchwinkel eines zweiten Rotorblattes, insbesondere des Rotors, angesehen.

Mit besonderem Vorteil werden schmale Peaks im Frequenzspektrum und/oder bei der Bildung der Frequenzspektrumsreferenz, insbesondere solche verursacht durch andere Vorgänge in der Windenergieanlage, wie Geräusche von Lüftern, Hydraulikpumpen oder Antrieben, und/oder solche mit einer Bandbreite von bis zu 100 Hz und/oder Halbwertsbreite bis zu 50 Hz, beim Vergleich und/oder bei der Erzeugung der Frequenzspektrumsreferenz außer Acht gelassen. Dabei handelt es sich in der Regel um Artefakte, deren Berücksichtigung die Erkennung verschlechtert.

Bevorzugt werden die Geräusche mit mindestens einem, insbesondere genau einem, Mikrofon, insbesondere Richtmikrofon, erfasst. Dadurch kann das Verfahren besonders sparsam und einfach durchgeführt werden. Insbesondere wird ein Mikrofon mit einem Bündelungsgrad von 3 oder mehr und/oder einem -3dB Winkel von unter 60° und/oder einer Rückwärtsdämpfung von mehr als 5 dB verwendet.

Mit besondere, Vorteil wird Mikrofon der Rotorblattbewegung folgend geführt. Dies kann manuell oder durch eine entsprechend Vorrichtung erfolgen. Insbesondere erfolgt die Ausrichtung so, dass die Richtung der größten Empfindlichkeit des Mikrofons auf das Rotorblatt ausgerichtet mitgeführt wird. Dies kann durch optische Kontrolle, beispielsweise mittels einem am Mikrofon angebrachten Sucher erfolgen. Dies ermöglicht eine besonders schnelle Datenerfassung. Insbesondere wird das Nachführen nacheinander und/oder gleichzeitig (mit weiteren Mikrofonen) für alle Rotorblätter durchgeführt.

Insbesondere wird pro Rotorblatt eine Geräuschlänge von mindestens 30 s und/oder maximal 5 Stunden und/oder eine Geräuschlänge die der Dauer von mindestens einer Rotorumdrehung, bevorzugt mindestens 20 Rotorumdrehungen und/oder maximal 100 Rotorumdrehungen entspricht aufgenommen.

In einer alternativen Ausgestaltung wird es bevorzugt, das Mikrofon, insbesondere Richtmikrophon, statisch auf einen Punkt und/oder eine Richtung gerichtet wird und/oder ist, wobei der Punkt oder die Richtung und/oder die Anordnung des Mikrofons so gewählt werden und/oder sind, dass eine Gerade zwischen Mikrofon und Punkt oder vom Mikrofon in die Richtung von alle Rotorblätter des Rotors nacheinander durchlaufen wird, und eine, Zuordnung der einzelnen Geräuschabschnitte zu den einzelnen Rotorblättern erfolgt, insbesondere für jedes Rotorblatt eine Zusammenfassung, insbesondere Summierung seiner Geräusche oder deren Frequenzspektren erfolgt.

Bevorzugt werden pro Rotorblatt mindestens ein, bevorzugt mindestens 20, und/oder maximal 1000 Durchläufe aufgenommen.

In manchen Anwendungsfällen beinhaltet das Verfahren das Erfassen und/oder Erstellen eines Frequenzeferenzspektrums des Rotors, das Ändern mindestens eines Pitchwinkels des Rotors um einen bekannten Winkel und die Durchführung des Verfahrens nach einem der vorstehenden Ansprüche. Durch die akustische Vermessung einer definierten Pitchwinkeländerung oder -abweichung kann eine gewisse Kalibration erfolgen, sodass, insbesondere bei baugleichen oder ähnlichen Anlagen eine genauere Abschätzung der Größe des Pitchwinkelunterschiedes erfolgen kann. So kann an einer ersten Windenergieanlagen eines Parks mit baugleichen Anlagen eine einzelne Anlage vor und nach der definierten Änderung mindestens eines Pitchwinkels vermessen werden, um eine Korrelation zwischen Abweichung und Pitchwinkelunterscheid zu erstellen, die für die Durchführung des Verfahrens an anderen Anlagen des Parks verwendet werden kann. Anstelle der akustischen Vermessung vor und nach Verstellung kann, bei bekannten Pitchwinkelunterschieden eines Rotors auch nur dieser Vermessen werden, ohne eine Änderung vorzunehmen, um eine Korrelation zu erhalten. Diese ist dann jedoch gegebenenfalls durch andere Einflüsse als den Pitchwinkelunterschied verfälscht.

Mit besonderem Vorteil umfasst das Verfahren die Bestimmung des Pitchwinkelunterschiedes. Da die Abweichung im Frequenzspektrum unter anderem abhängig ist vom Pitchwinkelunterschied, kann dieser aus der Abweichung bestimmt werden, insbesondere wenn andere Einflüsse reduziert werden oder klein gehalten werden. Dies kann insbesondere durch Kalibrierung durch akustische Aufnahme vor und nach Verstellung eines Pitchwinkels und Verwendung an baugleichen Anlagen zu ähnlichen Wetterbedingungen erfolgen.

Mit besonderem Vorteil wird das Verfahren an einer Mehrzahl von Windenergieanlagen, insbesondere baugleicher, durchgeführt wird. Dadurch kann ein Vergleich unter den Anlagen erfolgen und/oder ein Frequenzeferenzspektrums auf Basis einer Mehrzahl von, insbesondere baugleichen, Windenergieanlagen gewonnen werden, dies sogar vorteilhafterweise in benachbarten Standorten und zu ähnlichen Wetterbedingungen.

Gelöst wird die Aufgabe auch durch ein Verfahren zur Optimierung der Erzeugung elektrischer Energie mittels einer Windenergieanlage, wobei das Verfahren nach einem der vorstehenden Ansprüche durchgeführt wird und bei Erkennen einer Unwucht und/oder eines Pitchwinkelunterschiedes dieser zur Optimierung der Stromerzeugung reduziert wird, insbesondere sodass eine Reduzierung, insbesondere Beseitigung, der Abweichung im Frequenzspektrum nachweisbar ist, insbesondere im laufenden Betrieb der Windenergieanlage. Durch das Verfahren kann der Ertrag einer Windenergieanlage sowohl in einem bestimmten Zeitfenster als auch insgesamt durch die Verlängerung der Lebensdauer auf einfache Weise erfolgen. Das reduzieren kann dabei auch experimentell erfolgen, wenn beispielsweise die Richtung und/oder Größe der Abweichung nicht bekannt ist. So kann beispielsweise um einen, insbesondere vorbestimmten, Winkel in eine Richtung verstellt werden und dann erneut ein Frequenzspektrum erfasst und mit der Referenz verglichen werden. Ist eine Reduzierung der Abweichung zu beobachten kann eine weitere Verstellung in die gleiche Richtung erfolgen, bis keine Reduzierung mehr eintritt, danach kann zu kleineren Winkeln übergegangen werden und in die entgegengesetzte Richtung verstellt werden. So kann beliebig lange verfahren werden, bis keine weitere Reduzierung erkennbar ist. Ist jedoch bereits bei der ersten Verstellung eine Verschlechterung gegeben, kann direkt die Richtung gewechselt werden.

Gelöst wird die Aufgabe auch durch ein Verfahren zur Erzeugung elektrischer Energie, wobei mittels einer Windenergieanlage die elektrische Energie erzeugt wird und das Verfahren zur Optimierung der Erzeugung elektrischer Energie, insbesondere während der Erzeugung, durchgeführt wird und anschließend optimiert elektrische Energie erzeugt wird. Durch das Verfahren kann der Ertrag einer Windenergieanlage sowohl in einem bestimmten Zeitfenster als auch insgesamt durch die Verlängerung der Lebensdauer auf einfache Weise erfolgen. So lässt sich mehr regenerative Energie mit gleichem Ressourceneinsatz erzeugen.

Mit besonderem Vorteil beinhaltet das das Leiten der elektrischen Energie an ein Festland. Dort kann die Energie besonders gewinnbringend eingesetzt werden, da hier eine größere Bevölkerungsmenge und/oder -dichte und/oder Industriemenge und/oder -dichte gegeben ist, die elektrischer Energie bedarf.

Gelöst wird die Aufgabe auch durch ein Verfahren zur Erzeugung von Wasserstoff aus elektrischer Energie, wobei mittels einer Windenergieanlage die elektrische Energie erzeugt wird und das Verfahren zur Optimierung der Erzeugung elektrischer Energie, insbesondere während der Erzeugung, durchgeführt wird und anschließend optimiert elektrische Energie erzeugt und mittels dieser elektrischen Energie Wasserstoff, insbesondere mittels Elektrolyse, erzeugt wird. Wasserstoff ist ein geeigneter Speicher und wird in einigen Industrieprozessen auch benötigt. Zudem steht, insbesondere bei Off-shore Windenergieanlagen Wasser ausreichend zu Verfügung. So kann das Verfahren besonders vorteilhaft eingesetzt werden.

Mit besonderem Vorteil umfasst das Verfahren das Transportieren des Wasserstoffs zu einem Verbraucher, insbesondere an ein Festland. Dort kann der Wasserstoff besonders gewinnbringend eingesetzt werden, da hier eine größere Bevölkerungsmenge und/oder -dichte und/oder Industriemenge und/oder -dichte gegeben ist, die elektrischer Energie bedarf.

Weitere Vorteile und mögliche Ausgestaltungen werden im Folgenden rein exemplarisch anhand der schematischen Figuren erläutert.

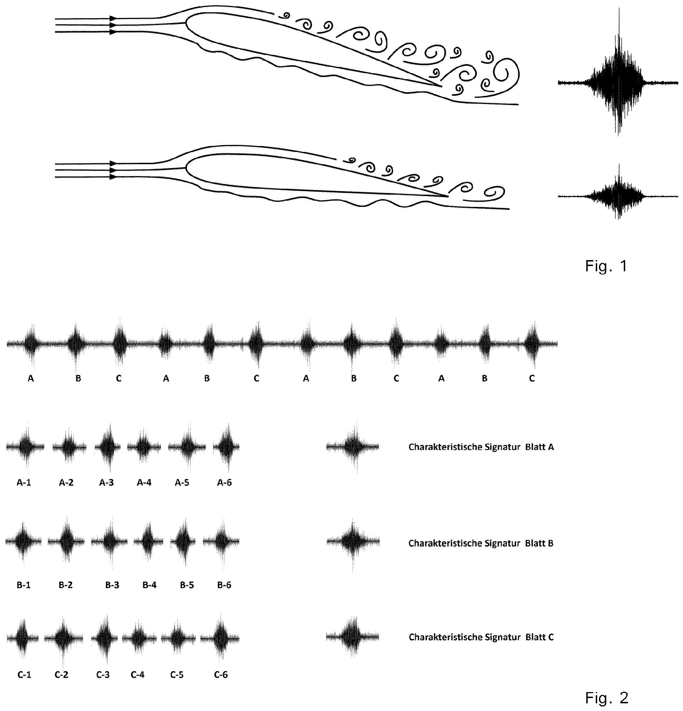

Fig. 1 zeigt links zwei schematische Querschnitte durch ein Rotorblatt, dass durch die Linien verdeutlicht von links angeströmt wird. Das Rotorblatt weist in der oberen und unteren Darstellung unterschiedliche Pitchwinkel auf. In der oberen Darstellung ergeben sich dadurch Richtung trailing edge stärkere Verwirbelungen als in der unteren Darstellung. Rechts dargestellt sind Veranschaulichung der aufgezeichneten Geräusche beim Passieren eines Richtmikrophons. In der akustischen Signatur sind deutliche Unterschiede zu erkennen.

Fig. 2 zeigt die von einem auf einen Rotor ausgerichtetem Richtmikrofon aufgenommenen Geräusche. Zu erkennen sind die Durchgänge der drei Rotorblätter des Rotors, gekennzeichnet mit den Buchstaben A bis C.

Darunter links dargestellt sind jeweils gesammelten einzelnen Geräusche (A-1 bis A6, B-1 bis B-6, C- 1 bis C-6) eines Rotorblatts, für die Rotorblätter A bis C untereinander. Die durch sechs geteilte Summe der Geräusche eines jeden Rotorblatts ist daneben als charakteristische Signatur des jeweiligen Blatts dargestellt.

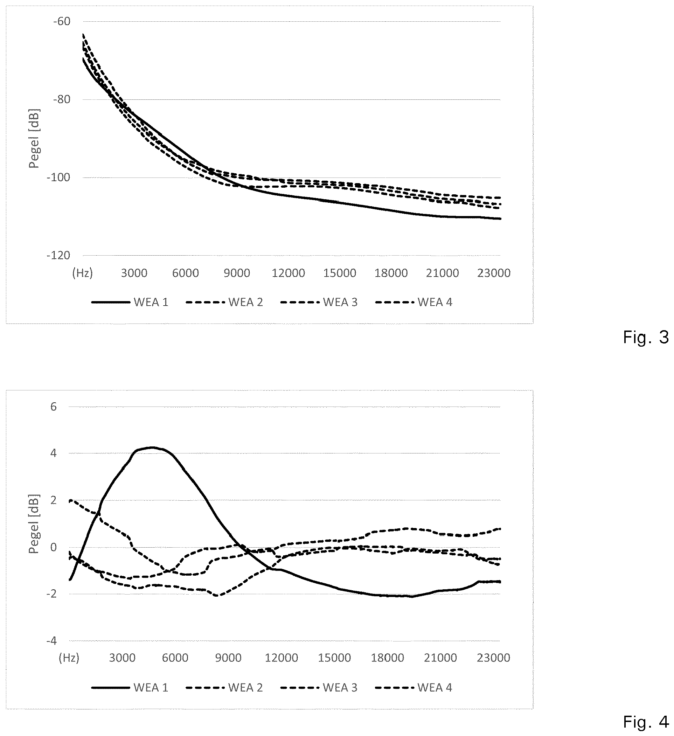

Fig. 3 zeigt das Frequenzspektrum der Geräusche von vier baugleichen Windenergieanlagen WEA 1 bis 4, die durch FFT aus der charakteristischen Signatur erhalten wurden. Zu erkennen ist, dass WEA 4 über breite Frequenzbereiche eine deutlich andere Geräuschentwicklung zeigt. Dies wird besonders deutlich in Figur 4, die die Abweichung vom Mittelwert (Frequenzspektrumsreferenz) der vier WEA zeigt. Würde WEA 4 bei der Bildung der Frequenzspektrumsreferenz unberücksichtigt bleiben oder wären mehrere baugleiche Rotoren für die Bildung der Frequenzspektrumsreferenz herangezogen worden, wäre der Unterschied noch deutlicher.

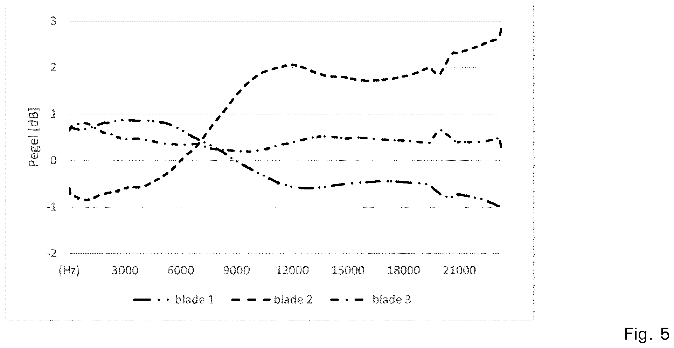

Fig. 5 zeigt die Abweichung der Spektren von charakteristischen Signaturen dreier Rotorblätter zu dem gemittelten Spektrum der Rotorblätter. Zu erkennen ist, dass das Blatt 2 eine Abweichung von über 1dB über mehr als 15kHz zeigt. Eine Vergleichsmessung mit einem Lasersystem zeigte an dieser Anlage die folgenden Pitchwinkelabweichungen vom mittleren Pitchwinkel:
Blatt 1: +0,6°
Blatt 2: -1,0°
Blatt 3: +0,4°

Die deutliche Abweichung des Pitchwinkels des Blatts 2 von denen der Blätter 1 und 3 konnte unproblematisch in der akustischen Geräuschentwicklung erkannt werden. Selbst die kleine Abweichung zwischen Blatt 1 und 2 ist abgebildet.

## Patentansprüche

1. Verfahren zur Erkennung einer Unwucht und/oder eines Pitchwinkelunterschiedes und/oder einer Rotorblattschädigung in einem Rotor einer Windenergieanlage, wobei im laufenden Betrieb der Windenergieanlage die Geräusche der von Wind angetriebenen Rotorblätter des Rotors erfasst werden, **dadurch gekennzeichnet, dass** ein Frequenzspektrum der Geräusche mit einer Frequenzspektrumsreferenz verglichen wird, um durch Abweichungen von der Frequenzspektrumsreferenz eine Unwucht und/oder einen Pitchwinkelunterschied und/oder einer Rotorblattschädigung zu erkennen

2. Verfahren nach Anspruch 1, wobei das Frequenzspektrumsreferenz abgeleitet ist oder wird aus den Geräuschen eines Rotors, einer anderen, insbesondere baugleichen, Windenergeianlage, einer Datenbank historischer Geräusche der Windenergieanlage und/oder einer anderen, insbesondere baugleichen Windenergieanlage und/oder aus den Geräuschen eines Rotorblatts oder mehrerer Rotorblätter des Rotors und/oder aus den Geräuschen des Rotors.

3. Verfahren nach einem der vorstehenden Ansprüche, wobei der Pitchwinkelunterschied der Unterschied zwischen dem Pitchwinkel eines ersten Rotorblattes, insbesondere des Rotors, und dem Pitchwinkel eines zweiten Rotorblattes, insbesondere des Rotors, ist.

4. Verfahren nach einem der vorstehenden Ansprüche, wobei schmale Peaks im Frequenzspektrum beim Vergleich und/oder bei der Erzeugung der Frequenzspektrumsreferenz ignoriert werden.

5. Verfahren nach einem der vorstehenden Ansprüche, wobei die Geräusche mit mindestens einem Mikrofon, insbesondere Richtmikrofon, erfasst werden.

6. Verfahren nach dem vorstehenden Anspruch 5, wobei das Mikrofon der Rotorblattbewegung folgend geführt wird.

7. Verfahren nach dem vorstehenden Anspruch 5, wobei das Mikrofon, insbesondere Richtmikrophon, statisch auf einen Punkt und/oder eine Richtung gerichtet wird und/oder ist, wobei der Punkt oder die Richtung und/oder die Anordnung des Mikrofons so gewählt werden und/oder sind, dass eine Gerade zwischen Mikrofon und Punkt oder vom Mikrofon in die Richtung von alle Rotorblätter des Rotors nacheinander durchlaufen wird, und eine, Zuordnung der einzelnen Geräuschabschnitte zu den einzelnen Rotorblättern erfolgt, insbesondere für jedes Rotorblatt eine Zusammenfassung, insbesondere Summierung seiner Geräusche oder deren Frequenzspektren erfolgt.

8. Verfahren nach einem der vorstehenden Ansprüche, wobei das Verfahren das Erfassen eines Referenzspektrums des Rotors, das Ändern mindestens eines Pitchwinkels des Rotors um einen bekannten Winkel und die Durchführung des Verfahrens nach einem der vorstehenden Ansprüche umfasst.

9. Verfahren nach einem der vorstehenden Ansprüche, wobei das Verfahren die Bestimmung des Pitchwinkelunterschiedes umfasst.

10. Verfahren zur Erkennung einer Unwucht und/oder eines Pitchwinkelunterschieds und/oder einer Rotorblattschädigung in einem Rotor einer Windenergieanlage wobei das Verfahren nach einem der vorstehenden Ansprüchen an einer Mehrzahl von Windenergieanlagen, insbesondere baugleicher, durchgeführt wird.

11. Verfahren zur Optimierung der Erzeugung elektrischer Energie mittels einer Windenergieanlage, wobei das Verfahren nach einem der vorstehenden Ansprüche durchgeführt wird und bei Erkennen einer Unwucht und/oder eines Pitchwinkelunterschiedes dieser zur Optimierung der Stromerzeugung reduziert wird, insbesondere sodass eine Reduzierung, insbesondere Beseitigung, der Abweichung im Frequenzspektrum nachweisbar ist, insbesondere im laufenden Betrieb der Windenergieanlage.

12. Verfahren zur Erzeugung elektrischer Energie, wobei mittels einer Windenergieanlage die elektrische Energie erzeugt wird und das Verfahren nach Anspruch 11, insbesondere während der Erzeugung, durchgeführt wird und anschließend optimiert elektrische Energie erzeugt wird.

13. Verfahren nach einem der vorstehenden Ansprüche 11 oder 12 umfassend das Leiten der elektrischen Energie an ein Festland.

14. Verfahren zur Erzeugung von Wasserstoff aus elektrischer Energie, wobei mittels einer Windenergieanlage die elektrische Energie erzeugt wird und das Verfahren nach Anspruch 11, insbesondere während der Erzeugung, durchgeführt wird und anschließend optimiert elektrische Energie erzeugt und mittels dieser elektrischen Energie Wasserstoff, insbesondere mittels Elektrolyse, erzeugt wird.

15. Verfahren nach dem vorstehenden Anspruch 13, umfassend das Transportieren des Wasserstoffs zu einem Verbraucher, insbesondere an ein Festland.
